# FASCICULE DE BREVET EUROPEEN

(11) **EP 4 406 047 B1**
(45) Date de publication et mention de la délivrance du brevet: **10.09.2025**
(21) Numéro de dépôt: 23825467.6
(22) Date de dépôt: 05.12.2023
(51) Int. Cl.: H01M 10/04, H01M 10/0587, H01M 50/538

(54) **CELLULE POUR BATTERIE ÉLECTRIQUE ET SON PROCÉDÉ DE FABRICATION**
ZELLE FÜR EINE ELEKTRISCHE BATTERIE UND VERFAHREN ZUR HERSTELLUNG DAVON
CELL FOR ELECTRIC BATTERY AND METHOD FOR MANUFACTURING SAME

(30) Priorité: 05.12.2022 FR 2212793
(43) Date de publication de la demande: 31.07.2024
(73) Titulaire: Verkor, 38000 Grenoble (FR)
(72) Inventeur: MILLE, Christophe, 38000 Grenoble (FR); CHALUMEAU, Adrien, 38000 Grenoble (FR); DELOBEL, Bruno, 38000 Grenoble (FR)
(74) Mandataire: Novagraaf Group
(86) Numéro de dépôt international: PCT/IB2023/062234
(87) Numéro de publication internationale: WO 2024/121736

(56) Documents cités:
- WO-A1-2022/216143
- US-A1- 2006 024 572

## Description

### Domaine technique de l'invention

L'invention concerne le domaine des batteries électriques pour véhicule automobile électrique. En particulier l'invention concerne des cellules de batteries électriques. De façon plus précise, l'invention a trait à des cellules de type cylindrique.

### Arrière-plan technique

Les cellules de batteries électriques de types cylindriques sont de plus en plus utilisées dans l'industrie automobile.

L'intérêt des cellules cylindriques réside dans leur capacité à emmagasiner une importante quantité d'énergie dans un volume réduit. Elles occupent ainsi un espace moins important dans le véhicule automobile pour une capacité d'emmagasinement d'énergie donnée.

La capacité d'emmagasinement d'énergie d'une cellule cylindrique est fonction de son diamètre. Ainsi plus le diamètre d'une cellule cylindrique est important, plus sa capacité à emmagasiner de l'énergie est importante.

Les cellules cylindriques sont fabriquées par enroulement autour d'un mandrin, d'un empilement successif d'au moins :
- une feuille d'électrode positive,
- une feuille de séparateur isolant,
- une feuille d'électrode négative,
- une feuille de séparateur isolant.

Le long des feuilles d'électrode, des languettes de collecte de courant sont rapportées et fixées auxdites feuilles d'électrode positive et négative. Bien qu'automatisée, cette opération est particulièrement fastidieuse et ralentit la cadence de production des cellules dites cylindriques. De plus, un défaut de fixation et/ou de contact entre les languettes et les électrodes peuvent réduire la performance des cellules cylindriques, voire provoquer des courts-circuits.

Afin de pallier ces problématiques, des industriels ont proposé de s'affranchir de languettes rapportées puis fixées aux électrodes.

Le document US2006024572A1 décrit une cellule de batterie électrique cylindrique et son procédé de fabrication. Le document WO2022216143A1 divulgue un ensemble d'électrodes et un appareil pour couper et plier la zone non revêtue de l'ensemble d'électrodes.

L'une de ces solutions, consiste à effectuer des découpes directement sur les feuilles d'électrodes pour former des languettes de collecte de courant avant l'enroulage autour d'un mandrin rotatif. Une fois l'enroulement terminé, ces languettes sont pliées et mise en contact avec un collecteur de courant rapporté.

Un inconvénient de cette méthode est qu'elle requiert de nombreuses découpes au cours d'une opération de découpe réalisée avant l'enroulage autour du mandrin. Il est alors constaté un ralentissement de la cadence de production des cellules en raison du nombre élevé de découpes à effectuer.

Un autre inconvénient de cette méthode réside dans le fait que les languettes de collecte de courant peuvent être endommagées au cours de l'enroulage autour du mandrin, lesdites languettes étant fines, celles-ci peuvent aisément s'abîmer lors d'opérations de manutention.

Un autre inconvénient de cette méthode réside dans la difficulté de plier les languettes en raison, entre autres, de leur nombre important. De plus la fixation des languettes en position pliée est fastidieuse et rencontre des difficultés techniques, lorsqu'il est question d'atteindre des cadences industrielles.

L'invention vise donc à résoudre les problèmes précités.

### Résumé de l'invention

A cet effet, il est proposé en premier lieu une cellule de batterie électrique pour véhicule à propulsion électrique, ladite cellule comprenant au moins un empilement successif d'une feuille :
- d'une première électrode comportant une première portion active revêtue d'une matière active et une première portion inactive,
- d'un premier séparateur isolant,
- d'une deuxième électrode comportant une deuxième portion active revêtue d'une matière active et une deuxième portion inactive,
- d'un deuxième séparateur isolant,

ledit au moins un empilement étant enroulé sur lui-même autour d'un axe central de sorte à former un cylindre, ladite cellule comprenant une première extrémité de laquelle fait saillie la première portion inactive, cellule dans laquelle la première portion inactive comporte au moins deux découpes de sorte à former entre lesdites découpes des languettes de collecte de courant pliables, ladite cellule comprenant un premier collecteur de courant comprenant une face intérieure agencée en regard de l'électrode et une face extérieure opposée à la face intérieure, ledit collecteur de courant étant munie d'au moins une première portion d'appui faisant saillie de la face intérieure selon l'axe central, ladite première portion d'appui étant destinée à venir en contact des languettes de collectes de courant et maintenir lesdites languettes de collecte de courant pliables en position pliée,
cellule dans laquelle, la portion d'appui s'étend sur une longueur entre une extrémité proximale située du côté de l'axe central et une extrémité distale opposée à l'extrémité proximale et située du côté d'une périphérie du premier collecteur de courant, la longueur étant mesurée selon un axe radial passant par la portion d'appui et étant sécant et sensiblement perpendiculaire à l'axe central,
cellule dans laquelle, la portion d'appui présente une hauteur mesurée depuis la face intérieure jusqu'une face de contact et selon l'axe central, ladite hauteur diminuant selon que l'on se déplace le long de la longueur depuis la périphérie en direction de l'axe central.

La production de telles cellules peut être réalisée à cadence industrielle, car le nombre de découpes est moins important et ceci sans perte d'efficacité de la cellule car la conductivité est conservée à des niveaux acceptables. Le pliage est rendu plus aisée du fait du nombre moins important de languettes de collecte de courant en comparaison des cellules actuelles. Le taux de rebus est ainsi significativement inférieur. De plus, la forme particulière de la portion d'appui permet d'assurer un pliage des languettes de collecte de courant en direction de l'axe central et ainsi faciliter le pliage dans la bonne direction par simple mise en position du collecteur de courant. En d'autres termes, on s'affranchit d'opérations de pré pliage (qui précèdent la mise en position du collecteur de courant à l'aide par exemple d'un outil rapporté) des languettes de collecte de courant. De plus, on évite la formation d'un amas métallique désordonné à l'endroit des languettes de collecte de courant.

Diverses caractéristiques supplémentaires peuvent être prévues seules ou en combinaison :
- celle-ci comprend une deuxième extrémité opposée à la première extrémité selon l'axe central, deuxième extrémité de laquelle fait saillie la deuxième portion inactive, cellule dans laquelle la deuxième portion inactive comporte au moins deux découpes de sorte à former entre lesdites découpes des languette de collecte de courant, ladite cellule comprenant un deuxième collecteur de courant munie d'au moins une deuxième portion d'appui destinée à venir en contact des languettes de collecte de courant pliables et les maintenir en position pliée ;
- les languettes de collecte de courant sont pliées les unes sur les autres, depuis une périphérie de la cellule en direction de l'axe central ;
- l'au moins une première portion d'appui du premier collecteur de courant est solidarisée aux languettes de collecte de courant de la première électrode et l'au moins une deuxième portion d'appui du deuxième collecteur de courant est solidarisée aux languettes de collecte de courant de la deuxième électrode ;
- celle-ci comprend, à chaque extrémité, plusieurs portions de languettes de collectes de courant pliables distinctes les unes des autres, et, les premier et deuxième collecteurs de courant comprennent plusieurs portions d'appui distinctes les unes des autres, chaque portion d'appui étant destinée à venir au contact d'une portion de languettes de collecte de courant pour maintenir les languettes de collecte de courant en position pliées ;
- les collecteurs de courant sont des disques métalliques comprenant une face intérieure agencée en regard de l'électrode et une face extérieure opposée à la face intérieure, cellule dans laquelle, l'au moins une portion d'appui fait saillie de la face intérieure selon l'axe central ;
- les découpes s'étendent sur une longueur sensiblement égale à la longueur (des portions d'appui) ;
- la face intérieure est agencée à distance des électrodes ;
- le deuxième collecteur de courant est sensiblement identique au premier collecteur de courant ;.

Il est proposé en deuxième lieu, une batterie électrique comprenant une pluralité de cellules telles que précédemment décrites et des connecteurs destinés à relier entre elles lesdites cellules.

Il est proposé, en troisième lieu, un procédé de fabrication d'une cellule telle que précédemment décrite, le procédé comprenant :
- une opération de fourniture d'une feuille d'une première électrode comportant une première portion active et une première portion inactive,
- une opération de fourniture d'une feuille d'un premier séparateur isolant,
- une opération de fourniture d'une feuille d'une deuxième électrode comportant une deuxième portion active et une deuxième portion inactive,
- une opération de fourniture d'une feuille d'un deuxième séparateur isolant,
- une opération d'empilement successif de la première électrode, du premier séparateur isolant, de la deuxième électrode, du deuxième séparateur isolant de sorte à former un empilement dans lequel la première électrode et la deuxième électrode sont décalées latéralement l'une par rapport à l'autre pour que la première portion inactive et la deuxième portion inactive fassent saillie au moins en partie en dehors de l'empilement ,
- une opération d'enroulement sur lui-même de l'empilement pour former sensiblement un cylindre, ledit cylindre comprenant une première extrémité de laquelle fait saillie, au-delà de l'empilement, la première portion inactive et une deuxième extrémité de laquelle fait saillie, au-delà de l'empilement, la deuxième portion inactive,
- une opération de découpe, postérieure à l'opération d'enroulement, de la première portion inactive et de la deuxième portion inactive, de sorte à former des languettes de collecte de courant,
- une opération de dépose du premier collecteur de courant et du deuxième collecteur de courant respectivement sur la première extrémité et sur la deuxième extrémité de sorte que l'au moins une portion d'appui vienne en contact de l'au moins une portion de languettes de collecte de courant de sorte à plier les languettes de collecte de courant.

Le procédé comprend une opération de soudage des portions d'appui des collecteurs de courant aux languettes de collecte de courant.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la [Fig.1] est une représentation schématique en coupe d'une partie de cellule cylindrique selon l'invention ;
[Fig.2] la [Fig.2] est une représentation schématique en vue de dessus d'un collecteur de courant selon l'invention ;

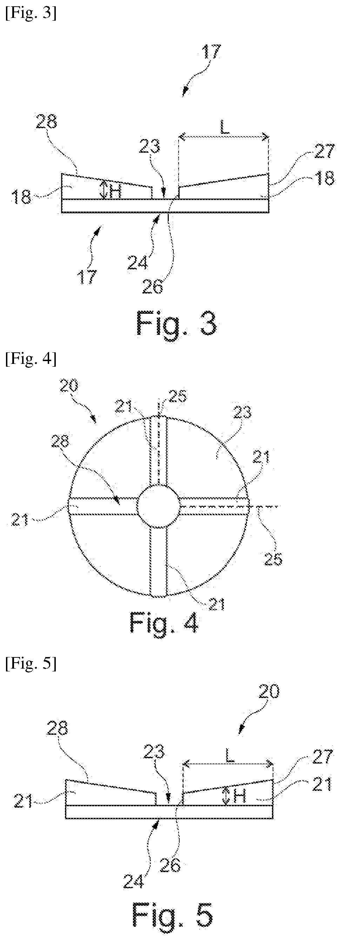

[Fig.3] la [Fig.3] est une représentation schématique en coupe du collecteur de courant de la [Fig.2] ;
[Fig.4] la [Fig.4] est une représentation schématique en vue de dessus d'un collecteur de courant selon l'invention ;
[Fig.5] la [Fig.5] est une représentation schématique en coupe du collecteur de courant de la [Fig.4] ;
[Fig.6] la [Fig.6] est une représentation schématique d'une extrémité d'une cellule selon l'invention ;
[Fig.7] la [Fig.7] est une représentation schématique d'une autre extrémité de la cellule selon l'invention.

### Description détaillée de l'invention

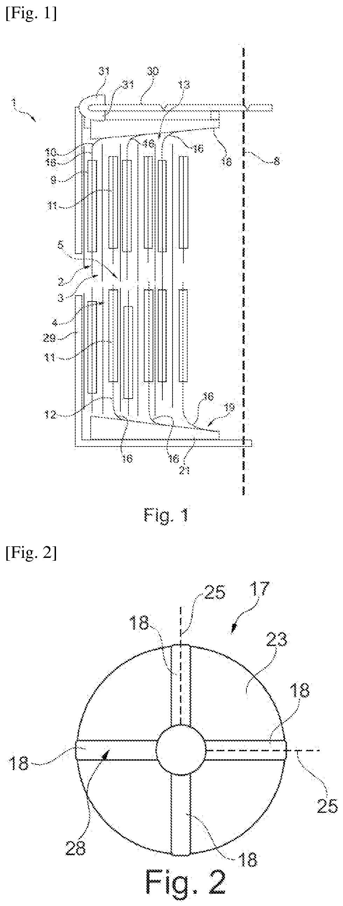

Sur la [Fig.1] est représentée une cellule 1 de batterie électrique. La cellule 1 est destinée à alimenter un véhicule à propulsion électrique. La cellule 1 comprend au moins un empilement successif d'une feuille :
- d'une première électrode 2,
- d'un premier séparateur 3 isolant,
- d'une deuxième électrode 4,
- d'un deuxième séparateur 5 isolant.

L'empilement est enroulé sur lui-même autour d'un axe 8 central de sorte à sensiblement former un cylindre.

La première électrode 2 comprend une première portion 9 active, laquelle est revêtue d'une matière active, et une première portion 10 inactive, laquelle n'est pas revêtue de matière active. Ainsi la première portion 10 inactive est un métal, par exemple l'aluminium ou du cuivre.

La deuxième électrode 4 comprend une deuxième portion 11 active, laquelle est revêtue d'une matière active, et une deuxième portion 12 inactive, laquelle n'est pas revêtue de matière active. Ainsi la deuxième portion 12 inactive est un métal, par exemple de l'aluminium ou du cuivre.

La cellule 1 comprend une première extrémité 13. De cette première extrémité 13, fait saillie la première portion 10 inactive. On entend par « saillie », le fait que la première portion 10 inactive s'étend au moins en partie, selon l'axe 8 central, au-delà des séparateurs 3, 5.

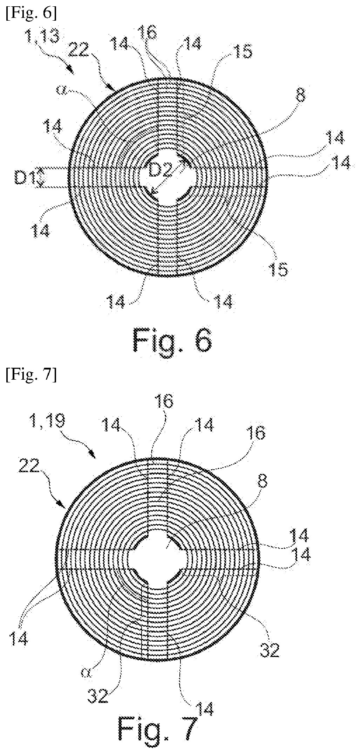

Ainsi qu'on peut le voir sur les figures 6 et 7, la première portion 10 inactive comporte au moins deux découpes 14. Dans le mode de réalisation représenté sur les dessins, la première portion 10 inactive comporte huit découpes 14 formant quatre premières portions 15 de languettes. Les découpes 14 permettent de former des languettes 16 de collecte de courant pliables.

La cellule 1 comprend un premier collecteur 17 de courant. Le premier collecteur 17 de courant comprend au moins une première portion 18 d'appui. La première portion 18 d'appui est destinée à venir en contact des languettes 16 de collecte de courant pliables et maintenir celles-ci en position pliée.

La production de telles cellules 1 peut être réalisée à cadence industrielle, car le nombre de découpes 14 est moins important et ceci sans perte d'efficacité de la cellule 1 car la conductivité est conservée à des niveaux acceptables. Le pliage est rendu plus aisée du fait du nombre moins important de languettes 14 de collecte de courant en comparaison des cellules actuelles. Le taux de rebus est ainsi significativement inférieur.

Avantageusement, la cellule 1 comprend une deuxième extrémité 19, opposée à la première extrémité 13 selon l'axe 8 central. De cette deuxième extrémité 19 fait saillie la deuxième portion 12 inactive. On entend par « saillie », le fait que la deuxième portion 12 inactive s'étend, selon l'axe 8 central, au-delà des séparateurs 3, 5.

Avantageusement, la deuxième portion 12 inactive comporte au moins deux découpes 14 formant entre lesdites découpes 14 des languettes de 16 collecte de courant. Dans le mode de réalisation représenté sur les dessins, la deuxième portion 12 inactive comporte huit découpes 14 formant quatre deuxièmes portions 32 de languettes.

Avantageusement, la cellule 1 comprend un deuxième collecteur 20 de courant muni d'au moins une deuxième portion 21 d'appui. La deuxième portion 21 d'appui est destinée à venir en contact des languettes 16 de courant pliables et les maintenir en position pliée.

Il est avantageux que la deuxième extrémité 19 soit identique à la première extrémité 13 pour des questions d'homogénéisation de la production. Ceci simplifie le processus de fabrication des cellules 1.

Avantageusement, les languettes 16 de collecte de courant sont pliées les unes sur les autres ainsi qu'on peut le voir sur la [Fig.1]. Elles sont pliées depuis une périphérie 22 de la cellule 1 en direction de l'axe 8 central.

Il est avantageux de plier les languettes 16 de collecte de courant dans cette direction car cela permet d'éviter les risques de courts-circuits.

Avantageusement, les premières portions 18 d'appui du premier collecteur 17 de courant sont solidarisées aux languettes 16 de collecte de courant de la première électrode 2. Avantageusement, les deuxièmes portions 21 d'appui du deuxième collecteur 20 de courant sont solidarisées aux languettes 16 de collecte de courant de la deuxième électrode 4. La solidarisation est réalisée par exemple par soudage.

En ne solidarisant que les portions 18, 21 d'appui aux languettes 16 de collecte de courant, le nombre de soudures est réduit tout en conservant une conductivité électrique acceptable. Cela permet d'améliorer les cadences de production.

Avantageusement, le premier collecteur 17 de courant comprend quatre premières portions 18 d'appui distinctes les unes des autres. Chaque première portion 18 d'appui est destinée à venir en contact d'une première portion 15 de languettes de collecte de courant et maintenir les languettes 16 de collecte de courant, en position pliée.

Avantageusement, le deuxième collecteur 20 de courant comprend quatre deuxièmes portions 21 d'appui distinctes les unes des autres. Chaque deuxième portion 21 d'appui est destinée à venir en contact d'une deuxième portion 32 de languettes de courant et maintenir les languettes 16 de collecte de courant, en position pliée.

Avantageusement, les premier et deuxième collecteurs 17, 20 de courant se présentent sous la forme d'un disque métallique. Le disque métallique comprend une face 23 intérieure agencée en regard de l'électrode 2, 4 et une face 24 extérieure opposée à la face 23 intérieure. Les portions 18, 21 d'appui font saillie de la face 23 intérieure, selon l'axe 8 central.

De telles portions 18, 21 d'appui assurent le contact avec les languettes 16 de collecte de courant.

Avantageusement, le premier collecteur 17 de courant et le deuxième collecteur 20 de courant sont sensiblement identiques.

Selon l'invention, chaque portion 18, 21 d'appui s'étend sur une longueur L. La longueur L est mesurée selon un axe 25 radial passant par la portion 18, 21 d'appui. L'axe 25 radial est sensiblement perpendiculaire à l'axe 8 central. L'axe 25 radial est sécant à l'axe 8 central. La longueur L est mesurée entre une extrémité 26 proximale située du côté de l'axe 8 central et une extrémité 27 distale opposée à l'extrémité 26 proximale selon l'axe 25 radial sensiblement perpendiculaire à l'axe 8 central. L'extrémité 27 distale est située du côté de la périphérie 22 de la cellule 1. Les découpes 14 s'étendent sur une longueur sensiblement égale à la longueur L.

Il est à noter qu'il existe autant d'axe 25 radiaux que de portion 18, 21 d'appui. En l'espèce chaque portion 18, 21 d'appui est associée à son axe 25 radial passant par ladite portion 18, 21 d'appui, sensiblement perpendiculaire à l'axe 8 central et in-tersectant ledit axe 8 central.

La longueur des portions 18,21 d'appui et celle des découpes 14 étant sensiblement égales, le contact est optimal et la conductivité est maintenue à un niveau acceptable.

Avantageusement, deux découpes voisines sont distantes l'une de l'autre d'une distance D1 inférieure ou égale à 80% d'un diamètre intérieure D2. Le diamètre intérieur D2 correspond au diamètre extérieur du mandrin d'enroulement.

Une telle distance D1 permet d'effectuer le pliage des languettes 16 de collecte de courant de façon aisée.

Avantageusement, les portions d'appui 18, 21 des collecteurs de courant comportent une face 28 de contact destinée à venir au contact des languettes 16 de collecte de courant.

Ceci permet de conserver une conductivité optimale.

Selon l'invention, la portion 18, 21 d'appui présente une hauteur H mesurée selon une direction parallèle à l'axe 8 central. La hauteur H est mesurée depuis la face 23 intérieure jusqu'à la face 28 de contact des portions d'appui. La hauteur H diminue selon que l'on se déplace le long de la longueur L et ceci depuis la périphérie 22 de la cellule 1 en direction de l'axe 8 central.

Ceci permet d'assurer un pliage des languettes 16 de collecte de courant en direction de l'axe 8 central et ainsi faciliter le pliage dans la bonne direction par simple mise en position des collecteurs 17, 20 de courant. En d'autres termes, on s'affranchit d'opérations de pré pliage (qui précèdent la mise en position du collecteur de courant à l'aide par exemple d'un outil rapporté) des languettes de collecte de courant. De plus, on évite la formation d'un amas métallique désordonné à l'endroit des languettes de collecte de courant.

Avantageusement, la face 23 intérieure du premier collecteur 17 de courant et du deuxième collecteur 20 de courant sont respectivement agencées à distance de la première électrode 2 et de la deuxième électrode 4. Il n'y a ainsi pas de contact entre la face 23 intérieure et les portions inactives des électrodes.

Avantageusement, les premières portions 15 de languettes sont agencées à 90° l'une de l'autre. Ainsi les premières portions 15 de languettes forment entre elles un angle α de 90°.

Avantageusement, les deuxièmes portions 32 de languettes sont agencées à 90° l'une de l'autre. Ainsi les deuxièmes portions 32 de languettes forment entre elles un angle α de 90°.

Ceci permet une meilleure conductivité en réduisant la distance parcourue par les électrons dans les feuilles d'électrode. La performance de la cellule est ainsi améliorée.

Ainsi qu'on peut le voir sur la [Fig.1], la cellule est assemblée en insérant l'ensemble comprenant l'empilement enroulé et les collecteurs de courant dans une capsule 29 cylindrique rigide. Le deuxième collecteur 20 de courant, qui est le pôle négatif, est en contact avec la capsule 29 cylindrique, ainsi la capsule 29 cylindrique est négativement polarisée. A l'inverse le premier collecteur 17 de courant est positivement polarisé et n'est pas en contact direct avec la capsule 29 cylindrique. La cellule 1 comprend un capuchon 30 rapporté et fixé sur le premier collecteur 17 de courant et donc polarisé positivement. Ainsi qu'on peut le voir sur la [Fig.1], des éléments 31 isolants sont agencés entre le premier collecteur 17 de courant et la capsule 29 cylindrique. D'autres éléments 31 isolants sont agencés entre le capuchon 30 et la capsule 29 cylindrique. Ces éléments 31 isolants permettent d'éviter des courts-circuits.

L'invention concerne aussi une batterie électrique (non représentée sur les dessins) comprenant plusieurs cellules 1. La batterie comprend des connecteurs destinés à inter-connecter les cellules entre elles.

Dans ce qui suit un procédé de fabrication de la cellule va être décrit.

Le procédé comprend une opération de fourniture :
- d'une feuille d'une première électrode comportant une première portion active et une première portion inactive,
- d'une feuille d'un premier séparateur isolant,
- d'une feuille d'une deuxième électrode comportant une deuxième portion active et une deuxième portion inactive,
- d'une feuille d'un deuxième séparateur.

Le procédé comprend une opération d'empilement successif de la première électrode, du premier séparateur isolant, de la deuxième électrode et du deuxième séparateur isolant. L'empilement est réalisé de sorte :
- qu'à la première extrémité, la première portion inactive fait saillie au-delà de l'empilement, et
- qu'à la deuxième extrémité, la deuxième portion inactive fait saille au-delà de l'empilement.

Le procédé comprend une opération d'enroulement sur lui-même de l'empilement pour former sensiblement un cylindre. Ainsi, à la première extrémité du cylindre, la première portion inactive fait saille de l'empilement tandis qu'à la deuxième extrémité du cylindre, la deuxième portion inactive fait saillie de l'empilement.

Le procédé comprend une opération de découpe, postérieure à l'opération d'enroulement. La découpe permet de former des languettes de collecte de courant. Dans le mode de réalisation représenté sur les dessins, huit découpes sont réalisées pour former quatre portions de languettes de collecte de courant sur chaque extrémité de la cellule.

Le procédé comprend une opération de dépose du premier collecteur de courant et du deuxième collecteur de courant respectivement sur la première extrémité et sur la deuxième extrémité. Cette dépose est réalisée de sorte que chaque portion d'appui vienne en contact d'une portion de languettes de collecte de courant. Le contact faisant pencher les languettes de collecte de courant en direction de l'axe central.

La production de telles cellules peut être réalisée à cadence industrielle, car le nombre de découpes est plus raisonnable sans perte d'efficacité de la cellule. De plus, les languettes de collecte de courant ne sont pas endommagées car les découpes sont réalisées après l'enroulement et non avant l'enroulement. Le pliage est aussi rendu plus aisée du fait du nombre moins important de languettes de courant en comparaison des cellules actuelles. Le taux de rebus est ainsi significativement inférieur.

Avantageusement, le procédé comprend une opération de soudage des portions d'appui aux languettes de collecte de courant, ceci permettant de solidariser les collecteurs de courant auxdites languettes de collecte de courant.

## Revendications

1. Cellule (1) de batterie électrique pour véhicule à propulsion électrique, ladite cellule (1) comprenant au moins un empilement successif d'une feuille :
- d'une première électrode (2) comportant une première portion (9) active revêtue d'une matière active et une première portion (10) inactive,
- d'un premier séparateur (3) isolant,
- d'une deuxième électrode (4) comportant une deuxième portion (11) active revêtue d'une matière active et une deuxième portion (12) inactive,
- d'un deuxième séparateur (5) isolant,
ledit au moins un empilement étant enroulé sur lui-même autour d'un axe (8) central de sorte à former un cylindre, ladite cellule (1) comprenant une première extrémité (13) de laquelle fait saillie la première portion (10) inactive, cellule (1) dans laquelle la première portion (10) inactive comporte au moins deux découpes (14) de sorte à former entre lesdites découpes (14) des languettes (16) de collecte de courant pliables, ladite cellule comprenant un premier collecteur (17) de courant comprenant une face (23) intérieure agencée en regard de l'électrode et une face (24) extérieure opposée à la face (23) intérieure, ledit collecteur de courant étant munie d'au moins une première portion (18) d'appui faisant saillie de la face (23) intérieure selon l'axe (8) central, ladite première portion (18) d'appui étant destinée à venir en contact des languettes (16) de collectes de courant et maintenir lesdites languettes (16) de collecte de courant pliables en position pliée, cellule dans laquelle la portion (18) d'appui s'étend sur une longueur (L) entre une extrémité (26) proximale située du côté de l'axe (8) central et une extrémité (27) distale opposée à l'extrémité (26) proximale et située du côté d'une périphérie (22) du premier collecteur (17) de courant, la longueur (L) étant mesurée selon un axe (25) radial passant par la portion (18) d'appui et étant sécant et sensiblement perpendiculaire à l'axe (8) central,
cellule dans laquelle la portion (18) d'appui présente une hauteur (H), mesurée depuis la face (23) intérieure jusqu'une face (28) de contact et selon l'axe (8) central, ladite hauteur (H) diminuant selon que l'on se déplace le long de la longueur (L) depuis la périphérie (22) en direction de l'axe (8) central.

2. Cellule (1) selon la revendication 1 dans laquelle, celle-ci comprend une deuxième extrémité (19) opposée à la première extrémité (13) selon l'axe (8) central, deuxième extrémité (19) de laquelle fait saillie la deuxième portion (12) inactive, cellule (1) dans laquelle la deuxième portion (12) inactive comporte au moins deux découpes (14) de sorte à former entre lesdites découpes (14) des languette (16) de collecte de courant, ladite cellule (1) comprenant un deuxième collecteur (20) de courant munie d'au moins une deuxième portion (21) d'appui destinée à venir en contact des languettes (16) de collecte de courant pliables et les maintenir en position pliée.

3. Cellule (1) selon l'une quelconque des revendications 1 ou 2 dans laquelle, les languettes (16) de collecte de courant sont pliées les unes sur les autres, depuis une périphérie (22) de la cellule (1) en direction de l'axe (8) central.

4. Cellule (1) selon l'une quelconque des revendications 2 ou 3 en combinaison avec la revendication 2 dans laquelle, l'au moins une première portion (18) d'appui du premier collecteur (17) de courant est solidarisée aux languettes (16) de collecte de courant de la première électrode (2) et l'au moins une deuxième portion (21) d'appui du deuxième collecteur (20) de courant est solidarisée aux languettes (16) de collecte de courant de la deuxième électrode (4).

5. Cellule (1) selon la revendication 4 dans laquelle, celle-ci comprend, à chaque extrémité (13, 19), plusieurs portions (15, 32) de languettes de collectes de courant pliables distinctes les unes des autres, et, les premier et deuxième collecteurs (17, 20) de courant comprennent plusieurs portions (18, 21) d'appui distinctes les unes des autres, chaque portion (18, 21) d'appui étant destinée à venir au contact d'une portion (15, 32) de languettes de collecte de courant pour maintenir les languettes (16) de collecte de courant en position pliées.

6. Cellule selon l'une quelconque des revendications 4 ou 5 dans laquelle, les collecteurs (17, 20) de courant sont des disques métalliques comprenant une face (23) intérieure agencée en regard de l'électrode (2, 3) et une face (24) extérieure opposée à la face (23) intérieure, cellule (1) dans laquelle, l'au moins une portion (18, 21) d'appui fait saillie de la face (23) intérieure selon l'axe (8) central.

7. Cellule (1) selon la revendication 6 dans laquelle les découpes (14) s'étendent sur une longueur sensiblement égale à la longueur (L).

8. Cellule (1) selon l'une quelconque des revendications 6 ou 7 dans laquelle, la face (23) intérieure est agencée à distance des électrodes (2, 4).

9. Cellule (1) selon la revendication 2 ou l'une quelconque des revendications 3 à 8 en combinaison avec la revendication 2 dans laquelle, le deuxième collecteur (20) de courant est sensiblement identique au premier collecteur (17) de courant.

10. Batterie électrique comprenant une pluralité de cellules (1) selon l'une quelconque des revendications précédentes et des connecteurs destinés à relier entre elles les cellules.

11. Procédé de fabrication d'une cellule selon l'une quelconque des revendications 1 à 9, comprenant :
- une opération de fourniture d'une feuille d'une première électrode comportant une première portion active et une première portion inactive,
- une opération de fourniture d'une feuille d'un premier séparateur isolant,
- une opération de fourniture d'une feuille d'une deuxième électrode comportant une deuxième portion active et une deuxième portion inactive,
- une opération de fourniture d'une feuille d'un deuxième séparateur isolant,
- une opération d'empilement successif de la première électrode, du premier séparateur isolant, de la deuxième électrode, du deuxième séparateur isolant de sorte à former un empilement dans lequel la première électrode et la deuxième électrode sont décalées latéralement l'une par rapport à l'autre pour que la première portion inactive et la deuxième portion inactive fassent saillie au moins en partie en dehors de l'empilement ,
- une opération d'enroulement sur lui-même de l'empilement pour former sensiblement un cylindre, ledit cylindre comprenant une première extrémité de laquelle fait saillie, au-delà de l'empilement, la première portion inactive et une deuxième extrémité de laquelle fait saillie, au-delà de l'empilement, la deuxième portion inactive,
- une opération de découpe, postérieure à l'opération d'enroulement, de la première portion inactive et de la deuxième portion inactive, de sorte à former des languettes de collecte de courant,
- une opération de dépose du premier collecteur de courant et du deuxième collecteur de courant respectivement sur la première extrémité et sur la deuxième extrémité de sorte que l'au moins une portion d'appui vienne en contact de l'au moins une portion de languettes de collecte de courant de sorte à plier les languettes de collecte de courant.

12. Procédé selon la revendication 11 dans lequel, celui-ci comprend une opération de soudage des portions d'appui des collecteurs de courant aux languettes de collecte de courant.

## Patentansprüche

1. Elektrobatteriezelle (1) für ein Fahrzeug mit Elektroantrieb, die Zelle (1) umfassend mindestens eine Aufeinanderstapelung einer Folie:
- einer ersten Elektrode (2) mit einem ersten aktiven Abschnitt (9), der mit einem aktiven Material beschichtet ist, und einem ersten inaktiven Abschnitt (10),
- eines ersten isolierenden Separators (3),
- einer zweiten Elektrode (4) mit einem zweiten aktiven Abschnitt (11), der mit einem aktiven Material beschichtet ist, und einem zweiten inaktiven Abschnitt (12),
- eines zweiten isolierenden Separators (5),
wobei die mindestens eine Stapelung um eine Mittelachse (8) auf sich selbst gewickelt ist, so dass sie einen Zylinder bildet, wobei die Zelle (1) ein erstes Ende (13) umfasst, aus dem der erste inaktive Abschnitt (10) vorsteht, wobei in der Zelle (1) der erste inaktive Abschnitt (10) mindestens zwei Ausschnitte (14) aufweist, so dass zwischen den Ausschnitten (14) biegsame Stromabnehmerzungen (16) gebildet sind, wobei die Zelle einen ersten Stromabnehmer (17) umfasst, der eine der Elektrode zugewandt angeordnete Innenseite (23) und eine der Innenseite (23) gegenüberliegende Außenseite (24) umfasst, wobei der Stromabnehmer mit mindestens einem ersten Stützabschnitt (18) versehen ist, der von der Innenseite (23) nach innen in Richtung der Mittelachse (8) vorsteht, wobei der erste Stützabschnitt (18) dazu bestimmt ist, mit den Stromabnehmerzungen (16) in Kontakt zu kommen und die biegsamen Stromabnehmerzungen (16) in gebogener Position zu halten, wobei in der Zelle sich der Stützabschnitt (18) über eine Länge (L) zwischen einem proximalen Ende (26), das auf der Seite der Mittelachse (8) liegt, und einem distalen Ende (27) erstreckt, das dem proximalen Ende (26) gegenüberliegt und auf der Seite eines Umfangs (22) des ersten Stromabnehmers (17) liegt, wobei die Länge (L) entlang einer radialen Achse (25) gemessen wird, die durch den Stützabschnitt (18) verläuft und die Mittelachse (8) schneidet und im Wesentlichen senkrecht zu dieser steht,
wobei in der Zelle der Stützabschnitt (18) eine Höhe (H) aufweist, gemessen von der Innenseite (23) zu einer Kontaktseite (28) und entlang der Mittelachse (8), wobei die Höhe (H) abnimmt, wenn man sich entlang der Länge (L) vom Umfang (22) in Richtung der Mittelachse (8) bewegt.

2. Zelle (1) nach Anspruch 1, wobei diese ein zweites Ende (19) umfasst, das dem ersten Ende (13) entlang der Mittelachse (8) gegenüberliegt, wobei von diesem zweiten Ende (19) der inaktive zweite Abschnitt (12) vorsteht, wobei in der Zelle (1) der zweite inaktive Abschnitt (12) mindestens zwei Ausschnitte (14) aufweist, so dass zwischen den Ausschnitten (14) Stromabnehmerzungen (16) gebildet sind, wobei die Zelle (1) einen zweiten Stromabnehmer (20) umfasst, der mit mindestens einem zweiten Stützabschnitt (21) versehen ist, der dazu bestimmt ist, mit den biegsamen Stromabnehmerzungen (16) in Kontakt zu kommen und sie in gebogener Position zu halten.

3. Zelle (1) nach einem der Ansprüche 1 oder 2, wobei die Stromabnehmerzungen (16) von einem Umfang (22) der Zelle (1) in Richtung der Mittelachse (8) übereinander gebogen sind.

4. Zelle (1) nach einem der Ansprüche 2 oder 3 in Verbindung mit Anspruch 2, wobei der mindestens eine erste Stützabschnitt (18) des ersten Stromabnehmers (17) an den Stromabnehmerzungen (16) der ersten Elektrode (2) befestigt ist und der mindestens eine zweite Stützabschnitt (21) des zweiten Stromabnehmers (20) an den Stromabnehmerzungen (16) der zweiten Elektrode (4) befestigt ist.

5. Zelle (1) nach Anspruch 4, wobei diese an jedem Ende (13, 19) mehrere Abschnitte (15, 32) biegsamer Stromabnehmerzungen umfasst, die voneinander getrennt sind, und wobei der erste und der zweite Stromabnehmer (17, 20) mehrere Stützabschnitte (18, 21) umfassen, die voneinander getrennt sind, wobei jeder Stützabschnitt (18, 21) dazu bestimmt ist, mit einem Abschnitt (15, 32) der Stromabnehmerzungen in Kontakt zu kommen, um die Stromabnehmerzungen (16) in der gebogenen Position zu halten.

6. Zelle nach einem der Ansprüche 4 oder 5, wobei die Stromabnehmer (17, 20) Metallscheiben sind, die eine der Elektrode (2, 3) zugewandt angeordnete Innenseite (23) und eine der Innenseite (23) gegenüberliegende Außenseite (24) umfassen, wobei in der Zelle (1) mindestens ein Stützabschnitt (18, 21) entlang der Mittelachse (8) von der Innenseite (23) vorsteht.

7. Zelle (1) nach Anspruch 6, wobei sich die Ausschnitte (14) über eine Länge erstrecken, die im Wesentlichen der Länge (L) entspricht.

8. Zelle (1) nach einem der Ansprüche 6 oder 7, wobei die Innenseite (23) beabstandet von den Elektroden (2, 4) angeordnet ist.

9. Zelle (1) nach Anspruch 2 oder einem der Ansprüche 3 bis 8 in Verbindung mit Anspruch 2, wobei der zweite Stromabnehmer (20) im Wesentlichen identisch mit dem ersten Stromabnehmer (17) ist.

10. Elektrische Batterie, die eine Vielzahl von Zellen (1) nach einem der vorstehenden Ansprüche und Verbinder umfasst, die dazu bestimmt sind, die Zellen miteinander zu verbinden.

11. Verfahren zum Herstellen einer Zelle nach einem der Ansprüche 1 bis 9, umfassend:
- einen Vorgang zum Bereitstellen einer Folie einer ersten Elektrode mit einem ersten aktiven Abschnitt und einem ersten inaktiven Abschnitt,
- einen Vorgang zum Bereitstellen einer Folie eines ersten isolierenden Separators,
- einen Vorgang zum Bereitstellen einer Folie einer zweiten Elektrode mit einem zweiten aktiven Abschnitt und einem zweiten inaktiven Abschnitt,
- einen Vorgang zum Bereitstellen einer Folie eines zweiten isolierenden Separators,
- einen Vorgang zum Aufeinanderstapeln der ersten Elektrode, des ersten isolierenden Separators, der zweiten Elektrode, des zweiten isolierenden Separators, um einen Stapel zu bilden, in dem die erste Elektrode und die zweite Elektrode seitlich zueinander versetzt sind, so dass der erste inaktive Abschnitt und der zweite inaktive Abschnitt mindestens teilweise aus dem Stapel vorstehen,
- einen Vorgang zum Wickeln der Stapelung auf sich selbst, um im Wesentlichen einen Zylinder zu bilden, wobei der Zylinder ein erstes Ende, von dem aus der erste inaktive Abschnitt über den Stapel vorsteht, und ein zweites Ende, von dem aus der zweite inaktive Abschnitt über den Stapel vorsteht, umfasst,
- einen Vorgang zum Ausschneiden im Anschluss an den Wickelvorgang des ersten inaktiven Abschnitts und des zweiten inaktiven Abschnitts, um Stromabnahmezungen zu bilden,
- einen Vorgang zum Ablegen des ersten Stromabnehmers und des zweiten Stromabnehmers an dem ersten Ende bzw. an dem zweiten Ende, so dass der mindestens eine Stützabschnitt mit dem mindestens einen Abschnitt der Stromabnehmerzungen in Kontakt kommt, um die Stromabnehmerzungen zu biegen.

12. Verfahren nach Anspruch 11, wobei dies einen Vorgang zum Verschweißen der Stützabschnitte der Stromabnehmer mit den Stromabnehmerzungen umfasst.

## Claims

1. An electric battery cell (1) for an electrically propelled vehicle, said cell (1) comprising at least one consecutive stack of a sheet:
- of a first electrode (2) comprising a first active portion (9) coated with an active material and a first inactive portion (10),
- of a first insulating separator (3),
- of a second electrode (4) comprising a second active portion (11) coated with an active material and a second inactive portion (12),
- of a second insulating separator (5),
said at least one stack being wound onto itself around a central axis (8) so as to form a cylinder, said cell (1) comprising a first end (13) from which the first inactive portion (10) projects, a cell (1) wherein the first inactive portion (10) comprises at least two cut-outs (14) so as to form bendable current-collection tabs (16) between said cut-outs (14), said cell comprising a first current collector (17) comprising an inner face (23) arranged facing the electrode and an outer face (24) opposite the inner face (23), said current collector being provided with at least a first bearing portion (18) projecting from the inner face (23) along the central axis (8), said first bearing portion (18) being intended to come into contact with the current-collection tabs (16) and hold said bendable current-collection tabs (16) in the bent position, a cell wherein the bearing portion (18) extends over a length (L) between a proximal end (26) located on the side of the central axis (8) and a distal end (27) opposite the proximal end (26) and located on the side of a periphery (22) of the first current collector (17), the length (L) being measured along a radial axis (25) passing through the bearing portion (18) and intersecting and being substantially perpendicular to the central axis (8),
a cell wherein the bearing portion (18) has a height (H), measured from the inner face (23) to a contact face (28) and along the central axis (8), said height (H) decreasing along the length (L) from the periphery (22) toward the central axis (8).

2. The cell (1) according to claim 1, wherein said cell comprises a second end (19) opposite the first end (13) along the central axis (8), second end (19) from which the second inactive portion (12) projects, a cell (1) wherein the second inactive portion (12) comprises at least two cut-outs (14) so as to form current-collection tabs (16) between said cut-outs (14), said cell (1) comprising a second current collector (20) provided with at least a second bearing portion (21) intended to come into contact with the bendable current-collection tabs (16) and hold them in the bent position.

3. The cell (1) according to claims 1 or 2 wherein the current-collection tabs (16) are bent over one another from a periphery (22) of the cell (1) toward the central axis (8).

4. The cell (1) according to claims 2 or 3 in combination with claim 2 wherein the at least first bearing portion (18) of the first current collector (17) is secured to the current-collection tabs (16) of the first electrode (2) and the at least second bearing portion (21) of the second current collector (20) is secured to the current-collection tabs (16) of the second electrode (4).

5. The cell (1) according to claim 4 wherein said cell comprises, at each end (13, 19), a plurality of bendable current-collection tab portions (15, 32) which are distinct from one another, and the first and second current collectors (17, 20) comprise a plurality of bearing portions (18, 21) which are distinct from one another, each bearing portion (18, 21) being intended to come into contact with a current-collection tab portion (15, 32) in order to hold the current-collection tabs (16) in the bent position.

6. The cell according to one of claims 4 and 5 wherein the current collectors (17, 20) are metal disks comprising an inner face (23) arranged facing the electrode (2, 3) and an outer face (24) opposite the inner face (23), a cell (1) wherein the at least one bearing portion (18, 21) projects from the inner face (23) along the central axis (8).

7. The cell (1) according to claim 6 wherein the cut-outs (14) extend over a length substantially equal to the length (L).

8. The cell (1) according to claims 6 and 7 wherein the inner face (23) is arranged at a distance from the electrodes (2, 4).

9. The cell (1) according to claim 2 or any one of claims 3 to 8 in combination with claim 2, wherein the second current collector (20) is substantially identical to the first current collector (17).

10. An electric battery comprising a plurality of cells (1) according to any one of the preceding claims and connectors intended for connecting the cells to one another.

11. A method for manufacturing a cell according to any one of claims 1 to 9, comprising:
- an operation of supplying a sheet of a first electrode comprising a first active portion and a first inactive portion,
- an operation of supplying a sheet of a first insulating separator,
- an operation of supplying a sheet of a second electrode comprising a second active portion and a second inactive portion,
- an operation of supplying a sheet of a second insulating separator,
- an operation of consecutively stacking the first electrode, the first insulating separator, the second electrode, and the second insulating separator so as to form a stack wherein the first electrode and the second electrode are laterally offset with respect to one another so that the first inactive portion and the second inactive portion project at least partly out of the stack,
- an operation of winding the stack onto itself so as to form substantially a cylinder, said cylinder comprising a first end from which projects, beyond the stack, the first inactive portion and a second end from which projects, beyond the stack, the second inactive portion,
- an operation of cutting, subsequent to the winding operation, the first inactive portion and the second inactive portion, so as to form current-collection tabs,
- an operation of arranging the first current collector and from the second current collector on the first end and on the second end, respectively, so that the at least one bearing portion comes into contact with the at least one current-collection tab portion so as to bend the current-collection tabs.

12. The method according to claim 11, wherein the method comprises an operation of welding the bearing portions of the current collectors to the current-collection tabs.
